# EUROPEAN PATENT SPECIFICATION

(11) **EP 1 592 513 B1**
(45) Date of publication and mention of the grant of the patent: **23.05.2007**
(21) Application number: 04701316.4
(22) Date of filing: 10.01.2004
(51) Int. Cl.: B05B 5/00

(54) **FLUID CONTAINER FOR ELECTROHYDRODYNAMIC SPRAY DEVICE AND METHOD OF USING SAME**
FLUIDBEHÄLTER FÜR ELEKTROHYDRODYNAMISCHE SPRÜHVORRICHTUNG UND VERWENDUNGSVERFAHREN DAFÜR
RECIPIENT A LIQUIDE POUR DISPOSITIF DE PULVERISATION EELCTRODYNAMIQUE ET PROCEDE D'UTILISATION

(30) Priority: 10.01.2003 US 439331 P; 11.01.2003 US 439616 P; 12.06.2003 US 478567 P
(43) Date of publication of application: 09.11.2005
(73) Proprietor: BATTELLE MEMORIAL INSTITUTE, Columbus Columbus, Ohio 43201-2693 (US)
(72) Inventor: GRAHAM, Brian, Dublin, OH 43016 (US); HARPHAM, R., Reade, Columbus, OH 43214 (US); ULRICH, Michael, S., Columbus, OH 43204 (US); MOSHOLDER, Michael, B., Columbus, OH 43235 (US); PIATT, Beverly, A., Columbus, OH 43202 (US); RIGLING, Maria, C., Columbia, MD 21044 (US); ROSENBERG, Dov, S., Bexley, OH 43209 (US); SCHELHORN, Jean, E., Granville, OH 43023 (US); JURATOVAC, Joseph, A., Columbus, OH 43214 (US); FINNEY, John, R., Dublin, OH 43016 (GB)
(74) Representative: Clark, Jane Anne
(86) International application number: PCT/US2004/000555
(87) International publication number: WO 2004/071669

(56) References cited:
- WO-A-02/055211
- DE-A- 19 522 754
- US-A- 4 749 125
- US-A- 5 531 384
- US-A- 5 865 551

## Description

The present invention relates to a portable electrohydrodynamic spray device and a device for the application of the electrically charged particles of material so produced. More particularly, the invention relates to a portable electrohydrodynamic spray device and method of using same for the application of chemical agents such as, for example, herbicides, fungicides, insecticides, acaricides, miticides, molluscicides, nematicides, rodenticides, plant desiccants, plant-growth regulators, etc. (pesticides in general), to a target.

The application of liquid formulations to crops, turfs, trees, and other plants as well as spraying of pesticides in and around the home using sprayers has been practiced for many years. More specifically, electrostatic sprayers have been developed to atomize pesticides for application on a target. For example, Coffee, U. S. Patent No. 4,356, 528, teaches an electrostatic sprayer to be used for ultra-low volume ("ULV") spraying of pesticides. The sprayer includes multiple metal capillary tubes as spray nozzles, an insulating cover, and a field-intensifying ring electrode. Other examples of electrostatic sprayers include U. S. Patent Nos. 4,376, 514; 4,467, 961; 4,470, 550; 4,735, 364; 4,476, 515; 4,580, 721; 4,629, 164; and 6,105, 571. However, no electrostatic sprayer system is known which allows for variations in spraying parameters in response to formulations/active ingredients sprayed through one or more nozzles. Prior to the present invention, electrostatic devices and fluid containers were instead tailored to the specific formulations or active ingredient being delivered. Accordingly, there is a recognized need for improvements in electrohydrodynamic sprayer design.

WO02/055211 describes an electrostatic spray device with a disposable product cartridge having a single outlet nozzle for spraying liquids such as cosmetics, skin preparations and lotions. In order to address the problem of high voltage induced emulsion product separation, WO02/055211 provides a conductive high voltage shield to reduce electrically induced emulsion product separation or configures the device or cartridge to prevent product at the charging site from being in fluid communication with the product reservoir.

In a first aspect, the present invention provides a portable electrohydrodynamic spray device as set out in claim 1.

In a second aspect, the present invention provides a method of spraying a target as set out in claim 20.

The present invention also provides a replaceable container or cartridge for attachment to an electrohydrodynamic spray device of the first aspect.

As used herein, the terms fluid "container" and "cartridge"are intended to be interchangeable, and each can be defined as a vessel for holding a liquid formulation that is sprayed by the electrohydrodynamic device. Although the present invention is not limited to specific advantages or functionality, it is noted that the fluid cartridge contributes to user safety by defining a secured cartridge that prevents any interaction between the user of the electrohydrodynamic sprayer and the liquid formulation that is being sprayed. The design of the fluid cartridge provides for quick and easy operator("do-it-yourselfer") change over of formulations and active ingredients. Also, the fluid cartridge is configured for ease of clean up in all steps of operation and is relatively small in size, which minimizes waste.

Moreover, the fluid cartridge can be configured to be refillable, recyclable, or disposable following its use.

It is contemplated that the present invention has applications both inside and outside of homes as well as businesses or industrial environments. In addition, the scale of use of the present invention can reach from individual pest treatments (e. g., weeds), to targeted or specific areas of treatment, through commercial large-scale use. Various formulations and active ingredient fluids have different electrohydrodynamic spraying requirements (e. g., flow rate, voltage, etc.), which can be accommodated by the present invention either manually or automatically via a cartridge/contents recognition feedback loop and control panel. Accordingly, the fluid cartridge can be configured so that the electrohydrodynamic spray device automatically adjusts certain settings in response to particular formulations within the fluid cartridge. This feature contributes to the ease of use of the present invention and assures the delivery of a quality spray, as well as a prescribed dose of a liquid formulation to an intended target. Moreover, the fluid cartridge can incorporate security features such that the electrohydrodynamic spray device prevents the spraying of an unauthorized fluid formulation.

The fluid cartridge can be configured so that the amount and expiration date of the liquid formulation within the cartridge is recognized by the electrohydrodynamic device, which alerts the user when a new fluid cartridge is needed. Accordingly, long-term storage of liquid formulations within the fluid cartridge of the present invention are possible with no degradation of system operation and efficiency parameters. Moreover, the fluid cartridge can be configured to automatically rinse the electrohydrodynamic nozzle and/or the cartridge itself of a liquid formulation via a cleansing and/or pumping mechanism, which can be part of the cartridge, the delivery device, or a separate element.

The fluid cartridge can be provided with various nozzle/ fluid/ cartridge configurations, with a variety of formulations or active ingredients, used in series with a common nozzle or set of multiple nozzles. As described with more particularity herein, the device is configured for easy insertion and removal of cartridges housing different formulations or active ingredients (in a variety of forms), each cartridge having one or more formulation or active ingredient. Moreover, means to ensure that the electrohydrodynamic spray device is not plugged or fouled by cross-contamination or aged material can be provided in a variety of ways (e. g., flush, purge, fluid, air, separate fluid paths, etc.), if necessary.

The fluid cartridge may comprise two or more separate reservoirs, each configured for holding a disparate sprayable liquid.

In an embodiment, a fluid containment system comprises two or more such fluid cartridges. Optionally, at least one fluid cartridge comprises two or more reservoirs for holding disparate sprayable liquids, the interface means provides a respective interface for each reservoir and the manifold provides a respective flow path for each reservoir.

The present invention also provides a fluid containment system comprising a portable electrohydrodynamic spray device in accordance with the first aspect and one or more further such replaceable containers or cartridges.

These and other features and advantages of the invention will be more fully understood from the following detailed description of the invention taken together with the accompanying drawings.

The following detailed description of the embodiments of the present invention can be best understood when read in conjunction with the following drawings, where like structure is indicated with like reference numerals and in which:
FIG.1 is a schematic block diagram showing some of the different components that make up an electrohydrodynamic spray device comprising a fluid cartridge in accordance with one embodiment of the present invention;
FIGS. 2 and 2A show schematic side views of an electrohydrodynamic spray device that includes a fluid container in accordance with another embodiment of the present invention;
FiGs. 3 and 3A show schematic side views of an electrohydrodynamic spray device including a fluid container in accordance with still another embodiment of the present invention;
FIGs. 4 and 4A show schematic perspective views of an electrohydrodynamic spray device that includes a fluid container in accordance with yet another embodiment of the present invention;
FIGs. 5 and 5A show a schematic perspective and side view, respectively, of an electrohydrodynamic spray device that includes a fluid container in accordance with yet still another embodiment of the present invention;
FIG. 6 shows a schematic perspective view of an electrohydrodynamic spray device that includes a fluid container in accordance with yet still another embodiment of the present invention;
FIG. 7 shows a schematic perspective view of an electrohydrodynamic spray device that includes a fluid container in accordance with yet still another embodiment of the present invention;
FIGs. 8 and 8A show a schematic perspective and side view, respectively, of an electrohydrodynamic spray device that includes a fluid container in accordance with yet still another embodiment of the present invention;
FIG. 9 shows a schematic perspective view of an electrohydrodynamic spray device that includes a fluid container in accordance with yet still another embodiment of the present invention;
FIG. 10 shows a schematic side view of an electrohydrodynamic spray device that includes a fluid container in accordance with yet still another embodiment of the present invention; and
FIG. 11 shows a schematic illustration of a manifold for an electrohydrodynamic spray device in accordance with the present invention.

Skilled artisans appreciate that elements in the figures are illustrated for simplicity and clarity and have not necessarily been drawn to scale. For example, the dimensions of some of the elements in the figures may be exaggerated relative to other elements to help improve understanding of embodiment(s) of the present invention.

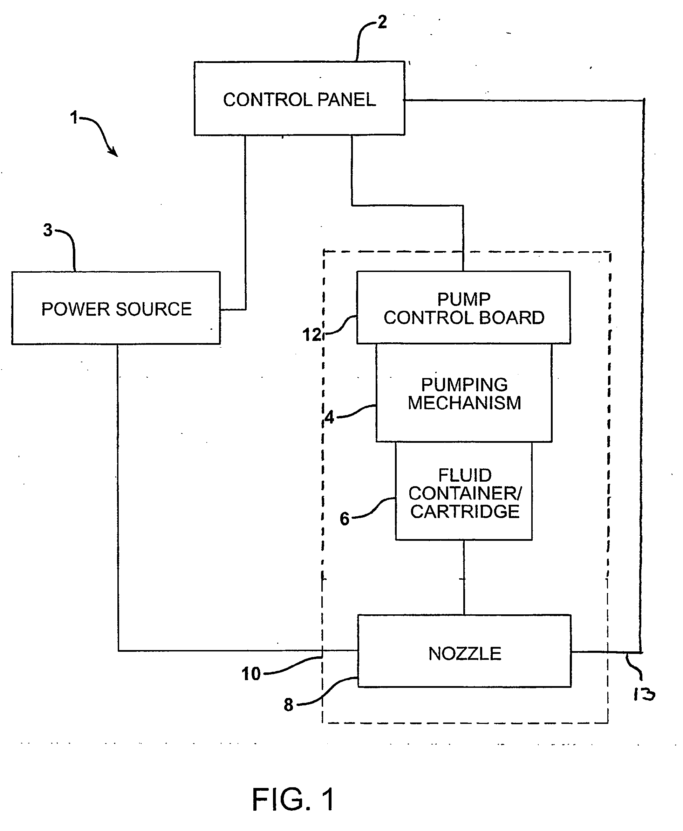

Referring initially to FIG. 1, a schematic block diagram of an electrohydrodynamic spray device **1** is illustrated. The device **1** can comprise the following components: a control panel **2**, a power source **3**, a pumping mechanism **4**, a fluid container/cartridge **6**, a nozzle **8**, and a spray head **10**. Reference is made to the following commonly assigned PCT International Patent Application entitled "SPRAY HEAD FOR ELECTROHYDRODYNAMIC SPRAY DEVICE AND ELECTROHYDRODYNAMIC SPRAYER SYSTEM" (Attorney Docket No. BAT 0079 PB / 40078.256), the disclosure of which further describes the components that make up the device **1** and is incorporated herein by reference. The components can be connected by a plurality of electrical and mechanical interfaces. The device **1** can be configured to be portable and effectively provides a charged aerosol of a liquid formulation by means of electrohydrodynamics.

The control panel **2** provides an interface between the device **1** and the operator of the device **1** and can comprise one or more electrical switches for the power supply **3** and pump b, as well as several warning LEDs for low battery and high voltage power, *inter alia.* The power source **3** can comprise one or more batteries, and can be configured to convert low DC voltage to the high DC voltage needed for aerosolization. By "high" DC voltage, we mean voltage in the kilovolt range. The fluid container/cartridge **6** is in fluid communication with the pumping mechanism **4** and the nozzle **8**. Alternatively, the fluid container **6**, pumping mechanism **4**, pump control board **12**, nozzle **8**, or combinations thereof, can be assembled or included as a unit as part of the spray head **10**. In any event, the pumping mechanism **4** is configured to pump a volume of liquid formulation from the fluid container/cartridge 6 to the nozzle 8 at a controlled flow rate, and can comprise a motion control circuit board and a DC motor (not shown), *inter alia.* The flow rate of the pumping mechanism **4** can be controlled by a pump control board **12**. The liquid formulation can contain an active ingredient, such as a pesticidal compound.

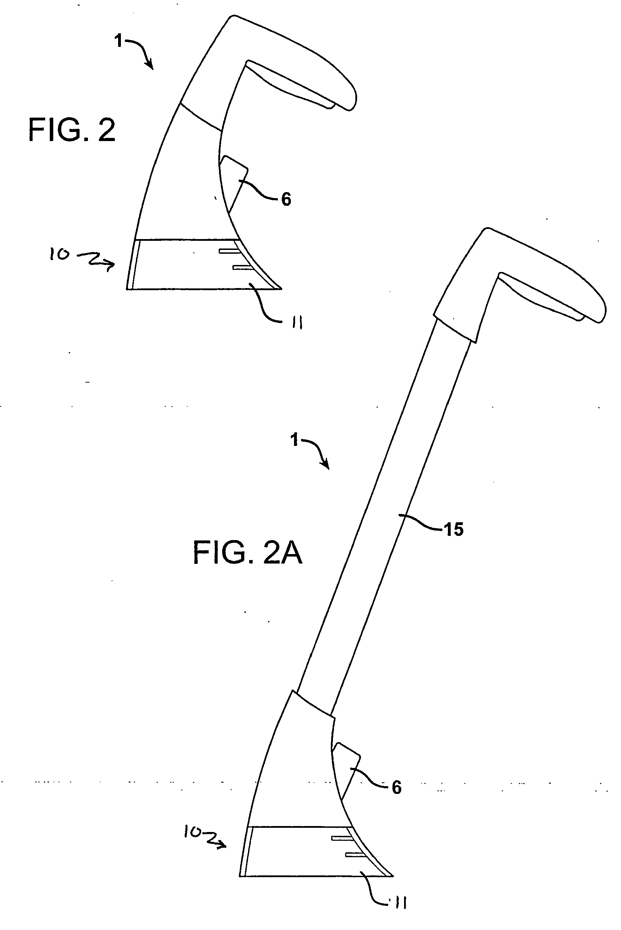

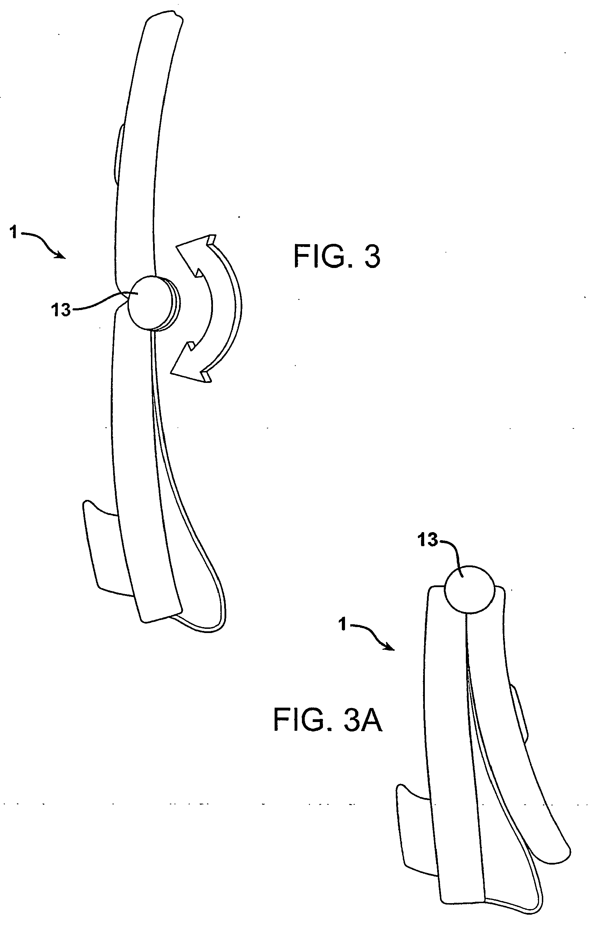

The high voltage provided by the power source **3**, pumping flow rate by way of the pump control board **12**, and application time are all easily adjustable on the device **1**. The device **1** in response to certain preset specifications for spraying a particular liquid formulation can make adjustments automatically. This feature contributes to the ease of use of the device **1**. The user of the device **1** can also make adjustments manually. Accordingly, due to its versatility and ability to spray a wide variety of formulations, a single device **1** can be used for a wealth of different applications. For example, the device **1** can be employed for applying a pesticide to a particular target plant or animal. Since the flow rate of the formulation is controlled during a particular application, the dosage applied to the plant or animal is also very controllable, which provides for efficiency in application. Moreover, in order to configure the device **1** so that it is comfortable to use for a variety of people, as well as configured to spray a variety of sizes of plants, the size of the device **1** can also be adjustable. For example, the device 1 can be converted from a long stand-up or stick-like configuration (see FIG. 2A) to that of hand-held proportions (see FIG. 2). This conversion of the device **1** can be accomplished by many means, including folding about a rotatable joint **13** (see FIGS. 3 and 3A), removing an extension piece **15** (see FIGs. 2 and 2A), or collapsing a telescopic portion (not shown).

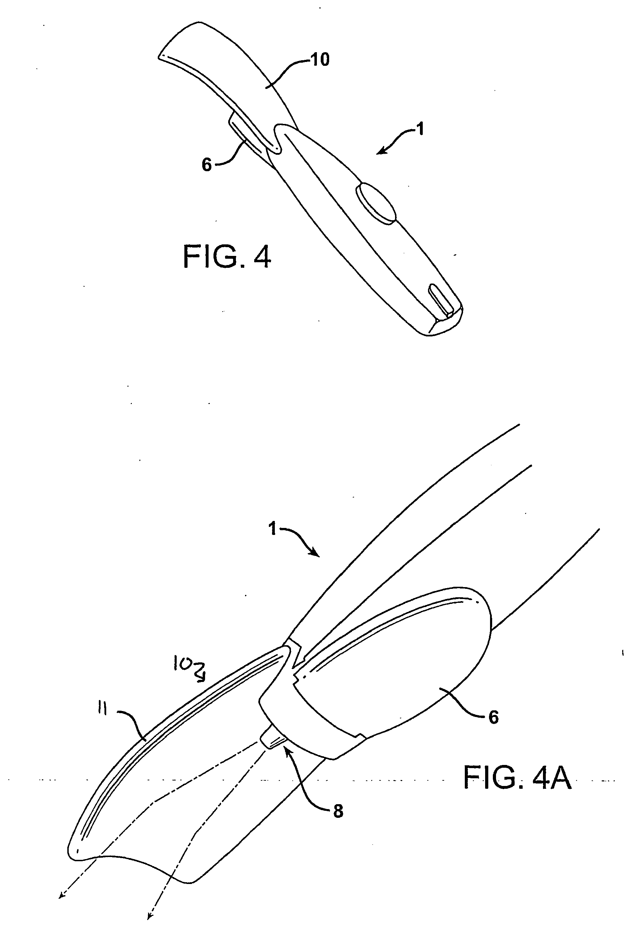

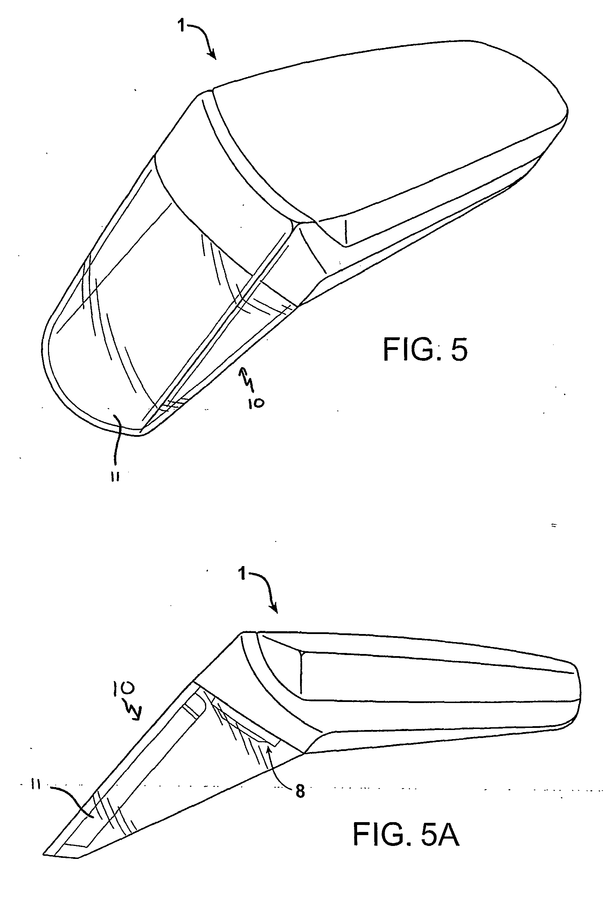

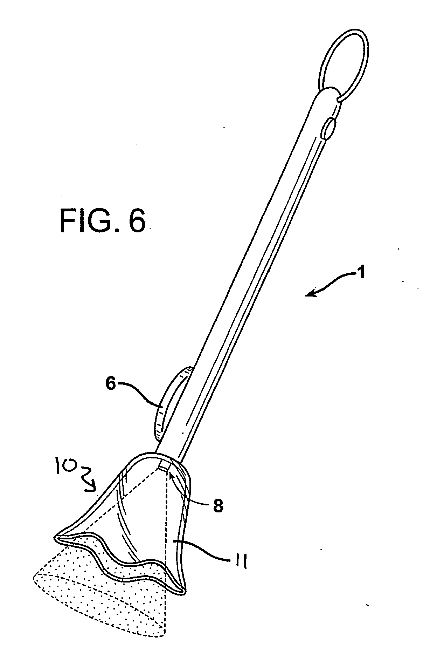

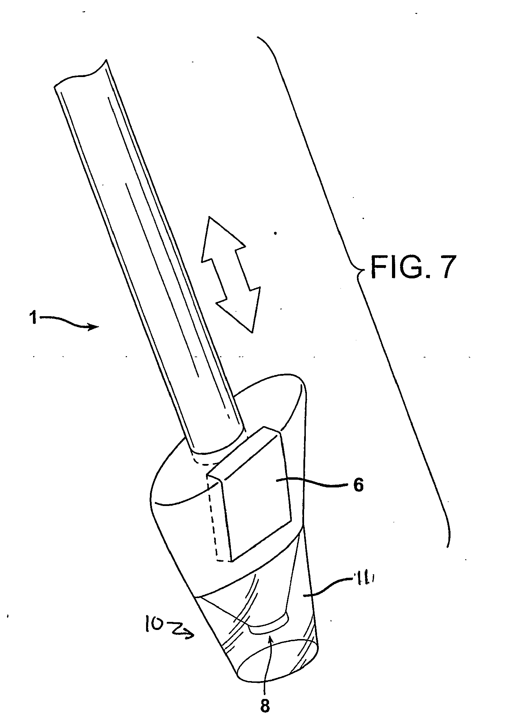

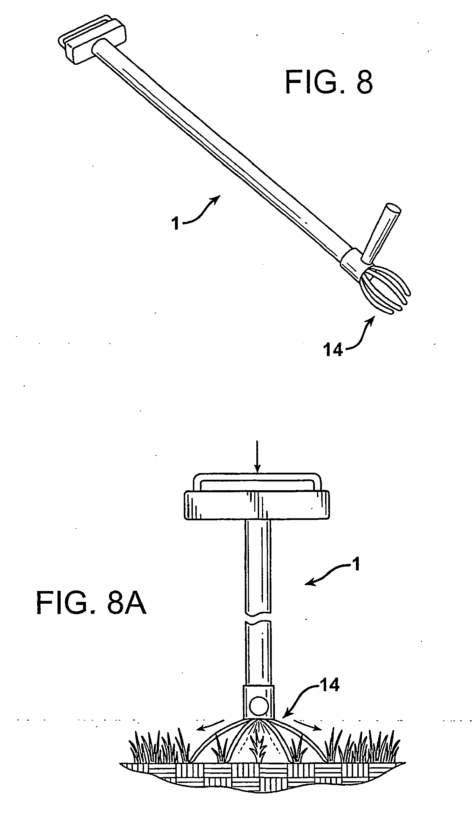

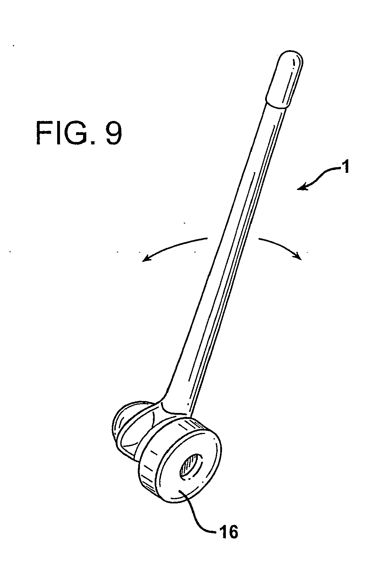

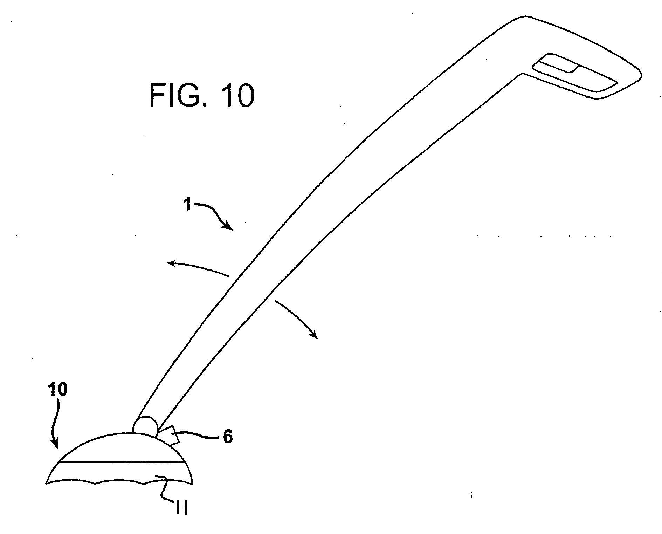

In accordance with one exemplary embodiment of the present invention, a fluid container **6** for use with an electrohydrodynamic spray device **1** is provided. The device **1** can be reusable, recyclable or disposable, and is configured to engage the container **6**. The fluid container **6** comprises at least one reservoir configured for holding a sprayable liquid. As illustrated in FIGS. 2, 2A, 3, 3A, 4, 4A, 6, 7, 8, 8A, 9 and 10, the device **1** and/or container **6**, are each configured so that when the container is engaged with the device **1**, at least a portion of the container **6** extends out from the device **1** for easy access by the user for replacing with a new or different container **6**, which container **6** can comprise a liquid formulation for spraying by the device **1**. The arrows in FIG. 7 illustrate the changing of the fluid container **6**. In accordance with the present invention, as illustrated in FIGs. 5 and 5A, the fluid container **6** can also be positioned within the handle of the device **1**. However, the user can still access the container **6** in this embodiment for changing thereof. The container **6** prevents any interaction between the user of the device **1** and the fluid that it sprays, thus contributing to user safety.

The fluid container **6**, further comprises at least one reservoir configured for holding a sprayable liquid, and at least one interface **23** in fluid communication with the reservoir. The fluid container **6** further comprises at least one manifold **22** comprising at least one fluid path **24**. The fluid path **24** is in fluid communication with the interface. The fluid container **6** can also contain a nozzle **8** comprising at least one spray site **25** that are in fluid communication with the fluid path **24**. The sprayable liquid can be selected from virtually any formulation one wishes to spray using electrohydrodynamic technology and, more particularly, can be selected from a rinsing or cleansing solution, a target preparation solution, a solution containing an active ingredient, a target sealing solution, or combinations thereof. The rinsing solution can be water or any other polar or non-polar solvent, and the target preparation solution can comprise a compound or series of compounds that, for example, open pores in the cuticle of a target (i.e., plant), such as, for example, an alkyl ester or fatty acid of other like oils (i.e., methyl oleate), which assist in the uptake and transport of certain systemic herbicidal compounds, such as, for example, a polar-acidic agrochemical complex like glyphosate, 2,4-D, glufosinate, or combinations thereof. As such, the active ingredient can be a pesticidal formulation and, more particularly, a pesticidal formulation selected from a herbicide, a fungicide, an insecticide, an acaricide, a miticide, a molluscicide, a nematicide, a rodenticide, a plant desiccant, a plant-growth regulator, or combinations thereof. The solution containing an active ingredient can be oil- or water-based, and can include the non-aqueous, oil-continuous microemulsions described in the PCT International Patent Application identified by Attorney Docket No. BAT 0080 PB/13894, the disclosure of which is incorporated herein by reference. The target sealing solution can comprise a compound or series of compounds that seal the pores of a target (i.e., plant) to seal in the active ingredient(s) and protect it from being compromised by natural or other environmental influences, such as, for example wind, (precipitation, such as rain, hail, ice) dust or irrigation. Such compound or series of compounds that seal the pores of the target can include film formers, preferably, low-cost film formers such as, for example, bone glue, polyvinyl alcohol, polyvinyl acetone, drying oils, and natural oils.

The electrohydrodynamic spray device **1** and fluid container **6** can define a security feature relationship, such that the device **1** prevents the use of an unauthorized fluid container or cartridge **6** that contains a certain sprayable liquid formulation. For example, the device **1** can be configured so that it only operates (sprays) when a container **6** containing a herbicidal formulation is engaged with the device **1**. Accordingly, in this configuration, if a user inserts a container **6** containing, for example, an insecticidal formulation, the device **1** will not operate. As a result, the user cannot accidentally or unintentionally apply the wrong formulation to a target.

As illustrated in FIG. 1, the device **1** can further comprise a container/contents recognition feedback loop **13**, which enables the passage of data via electrical signals from the container **6** to the control panel **2**. It is contemplated that the control panel **2** functions both as a user interface and a controller that converts the user interface into appropriate electrical signals, which are in communication with the power source **3**, and pump control board **12**, etc. These electrical connections represent the input from the container **6** to the device **1** that the control panel **2** employs, alone or in combination with user input, to create electrical signals to the power source **3**, and/or pump control board **12**, which signals can vary depending upon the particular input from the container **6**. As such, the fluid container **6** can also be configured so that certain formulations contained within the container **6** are recognized by the electrohydrodynamic spray device **1** causing settings such as voltage, flow rate, and spray application time, *inter alia,* to automatically adjust in accordance with preset specifications for certain liquid formulations. This feature enables a user to operate the device **1** without having to change settings or time the application of a particular liquid formulation, thereby contributing to the ease of use of the present invention. The automatic adjustment of spray settings and delivery time further assists to ensure that a quality spray is produced, as well as delivery of a prescribed dose of a particular liquid formulation to a particular intended target.

In addition, the fluid container or cartridge **6** can be configured so that the amount of liquid formulation contained within the container **6** can be measured by the electrohydrodynamic spray device **1**, which device **1** then alerts the user when the liquid formulation is near to being depleted and a new fluid container **6** is needed. Moreover, the fluid container or cartridge **6** can be configured so that the expiration date of a certain liquid formulation contained within the container **6** can be determined by the spray device **1**, which device **1** then alerts the user when the particular formulation is expired and a new fluid container or cartridge **6** is needed.

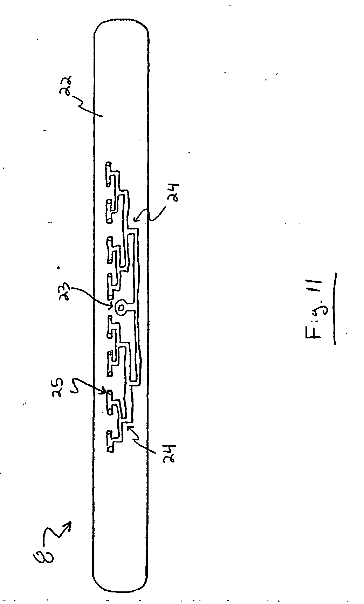

As shown in FIG. 11, the container **6** can further comprise at least one fluid path **24**, at least one manifold **22** in fluid communication with the fluid path **24**, and at least one nozzle **8**. The nozzle **8** comprises a plurality of spray sites 25 that are in fluid communication with the manifold **22**. The fluid container **6** further comprises at least one reservoir configured for holding a sprayable liquid, and at least one interface **23** in fluid communication with the reservoir.

In accordance with another embodiment of the present invention, the container **6** device **1** can comprise a single fluid path **24**, a manifold **22** in fluid communication with the fluid path **24**, and a common nozzle **8**. The nozzle **8** comprises at least one plurality of spray site **25** in fluid communication with the fluid path **24**. The container **6** comprises a reservoir configured for holding a sprayable liquid, as defined herein, and an interface **23** which is in fluid communication with the reservoir and the fluid path **14.** In this configuration, individual containers **6** are employed for each specific type of application, such as, for example, individual formulation containers **6** that each separately contain herbicidal, insecticidal or fungicidal compounds, *inter alia.* Moreover, the fluid container **6** can optionally define a separate container containing a rinsing or cleansing solution, which solution can be sprayed or pumped through the nozzle **8** before and after each use of a formulation container **6** containing an active ingredient.

The nozzle **8** and fluid container **6** can optionally define a single unit, which would eliminate the need to clean or flush the nozzle **8** after using a formulation container **6**. Moreover, a series of individual fluid containers **6** can be employed to, for example, a) pre-rinse the nozzle **8** (if not coupled with the fluid container **6**), prepare the target (e.g., apply a formulation which opens the pores of a plant), c) apply the active ingredient (e.g., a pesticidal formulation), d) seal the target (e.g., apply a pore sealer to the targeted plant to seal in the pesticidal formulation and protect it from being compromised by environmental influences), and e) post-rinse the nozzle **8**.

In accordance with yet another embodiment of the present invention, the container **6** can comprise two or more separate fluid paths **24**, two or more separate manifolds **22**, each in fluid communication with one of the separate fluid paths **22**, and a common nozzle **8**. The common nozzle **8** can comprise a plurality of spray sites **25,** each in fluid communication with one of the separate manifolds **22**. It is to be understood, however, that each separate manifold **22** is in fluid communication with a plurality of spray sites **25**. The container **6** can comprise two or more separate reservoirs, each configured for holding its own disparate sprayable liquid. The container **6** can also comprise two or more interfaces **23**, each one in fluid communication with one of the reservoirs as well as one of the fluid paths **24**. In this configuration, each container **6** can contain one or more of the following, as defined herein, in each of the two or more separate reservoirs: a) a cleaning or rinsing solution, b) a target preparation solution, c) a solution containing an active ingredient (e.g., a pesticidal formulation), and d) a target sealing solution. Where the fluid container **6** of the instant embodiment houses multiple disparate sprayable liquids in separate reservoirs, only one container needs to be employed for multiple applications and multistage application is automatic (the user does not need to change containers between treating a target and flushing the common nozzle **8**). Accordingly, the nozzle **8** can be automatically cleaned before and after each use and container formulations (e.g., pesticides) can be rinsed from the container **6** at the end of the useful lifetime of the container **6** for easy disposal thereof.

In accordance with still another embodiment of the present invention, a fluid containment system is provided comprising two or more fluid containers **6**, each comprising at least one fluid path **24** and at least one manifold **22**, each in fluid communication with one of the fluid paths **24**, and a common nozzle **8**. The common nozzle **8** comprises at least one spray site **25**, each in fluid communication with one of the manifolds **22**. Again, it is to be understood that each manifold **22** is in fluid communication with at least one spray site **25**. While two or more containers **6** can be engaged with the device **1**. In accordance with this embodiment of the present invention, each container **6** will typically comprise a single reservoir configured for holding a sprayable liquid, as well as an interface **23** in fluid communication with the reservoir and one of the fluid paths **25**. However, it is also contemplated that each container **6** can comprise two or more separate reservoirs, each reservoir configured for holding disparate sprayable liquids, and each reservoir being in fluid communication with one of the fluid paths **24**. Accordingly, the device **1** is configured to be engaged with multiple containers **6** and thus apply a plurality of disparate sprayable liquids through a common nozzle **8**. In use, the user would indicate to the device **1** which container **6** to use for a given application by operating the control panel **2** (i.e., the cleaning solution container, the target preparation solution container, the active ingredient container; or the target sealing solution container, *inter alia*). Accordingly, multistage application of different formulations is provided without having to change containers **6**. This feature could provide a cost advantage to the preparation of individual fluid containers **6** that comprise multiple liquid formulations, (e.g., containers comprising more than one reservoir, each configured for holding disparate sprayable liquids). Moreover, in accordance with the present embodiment, the common nozzle 8 can be automatically cleaned by employing a cleaning solution container prior to and following each application of a liquid formulation containing an active ingredient.

In accordance with yet still another embodiment of the present invention, the container **6** can comprise two or more separate fluid paths **24**, two or more separate manifolds **22**, each manifold **22** in fluid communication with one of the fluid paths **24**, and two or more nozzles **8**, each comprising at least one spray sites **25** in fluid communication with one of the manifolds **22**. Here too, it is to be understood that each manifold **22** is in fluid communication with at least one spray site **25**. Optionally, the container **6** can comprise two or more reservoirs, each reservoir configured for holding disparate sprayable liquid, and two or more interfaces **23**, each interface **23** in fluid communication with one of the reservoirs and one of the fluid paths **24**.

In addition to the features and advantages of the different embodiments of the present invention that are described herein, the instant embodiment by employing dual nozzles **8**, each nozzle **8** in fluid communication with one of the manifolds **22** and, therefore, a disparate sprayable liquid, can successfully encapsulate formulations during the aerosolization thereof by the device 1 in order to increase biological efficacy. Accordingly, this particular feature could allow, for example, the combining of glyphosate with other fast acting herbicidal active ingredients for quick kill visualization of undesirable vegetation. Moreover, the two or more nozzles **8**, each one in fluid communication with a disparate liquid formulation, can be sprayed simultaneously to provide a broader spectrum of active ingredients to a target. This allows for greater flexibility in the design of formulations by mixing during the aerosolization process, such as, for example, the mixing of volatile formulations.

In accordance with yet still another embodiment of the present invention, a method of delivering a sprayable liquid to a target by means of electrohydrodynamics is provided comprising: a) loading a fluid container into an electrohydrodynamic spray device, wherein the fluid container holds a sprayable liquid; b) entering data on the sprayable liquid into the device; c) priming the device such that the sprayable liquid is delivered to a nozzle in fluid communication with the container; d) positioning the nozzle adjacent to the target; and e) delivering the sprayable liquid to the target as a charged aerosol by activating the electrohydrodynamic spray device. As noted herein, the fluid container can be configured so that entering data on the sprayable liquid is automatic upon loading of the fluid container into the electrohydrodynamic device. Also, priming of the device can be automatically performed upon loading of the fluid container into the device, or upon activating the device. This step can be performed by activating a pumping mechanism in the device, which pump delivers the sprayable liquid into and through a manifold to each of a plurality of spray sites in a nozzle. Accordingly, after priming is complete, there is sprayable liquid at each spray site.

In accordance with the present invention, the container can be configured so that upon insertion of the container into the cartridge housing, the container notifies the device of its contents, and the device processes the appropriate parameters for spraying the contents of that particular container. Accordingly, the device can be backward compatible for containers, even if the device is made to adjust for parameters not originally programmed. Software upgrades for the device can allow for more contents (or defined parameters) over time. In contrast, the container can be configured so that upon insertion of the container into the device, the container notifies the device of the particular parameters needed for spraying. This information can be passed by electronic, mechanical and magnetic means. As such, the containers can be backward compatible with the device.

After positioning the nozzle adjacent to the target, activating the device will deliver a dose of sprayable liquid to the target in accordance with the flow rate, activation time and voltage which is pre-set for the particular liquid being sprayed. Multiple targets can be sprayed by repeating the method steps. When spraying is complete, the fluid container can remain in the device or it can be removed. Accordingly, upon powering off the device, the sprayable liquid can be automatically drawn back into the container. Cleaning or rinsing the device (i.e., nozzle) of the sprayable liquid can be performed by a purge step, wherein a rinsing formulation (i.e., water) is pumped through the nozzle. The rinsing formulation can be contained in a separate fluid container, or in the same container that contains an active, that container comprising multiple reservoirs in accordance with the present invention.

The following table sets out some of the spraying variables which can be pre-set in the device depending upon the specific sprayable liquid formulations contained within the fluid container, the dose desired (and thus concentration of active), and manifold size.

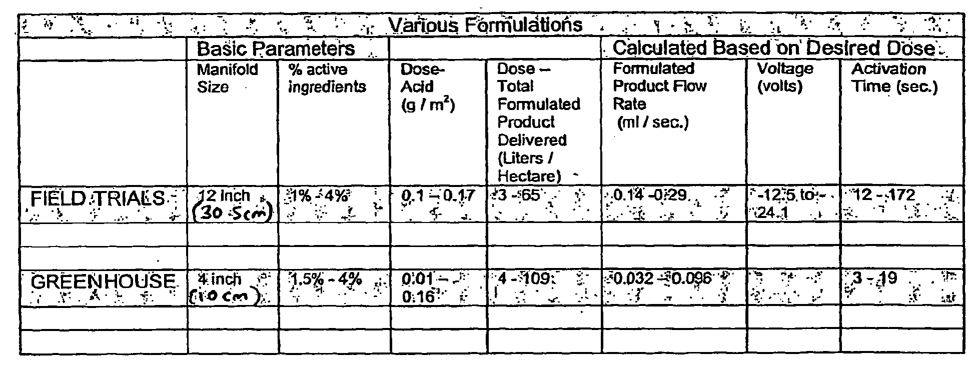

While the invention has been described by reference to certain preferred embodiments, it should be understood that numerous changes could be made within the spirit and scope of the inventive concepts described. This includes modification to the embodiment shown in sketches from hand-held devices to other configurations which include but are not limited to boomed devices pulled behind tractors, stationary-frames used to place a plant in to treat, and devices integrally installed in green-houses/glass-houses devices. Accordingly, it is intended that the invention not be limited to the disclosed embodiments, but that it have the full scope permitted by the language of the following claims.

## Claims

1. A portable electrohydrodynamic spray device configured to be held by an operator, the device having:
a spray head (10) comprising a replaceable cartridge comprising sprayable liquid reservoir means (6) and outlet nozzle means (8, 25); and
a power source (3) for providing a voltage to subject liquid issuing from the outlet nozzle means (8) to an electric field to cause electrohydrodynamic processing of the liquid to produce a spray,
**characterised in that** the replaceable cartridge has a manifold (22) in fluid communication with said liquid reservoir means (6) via interface means (23) and in fluid communication with the outlet nozzle means (8,25) to provide a plurality of flow paths (24) between the liquid reservoir means (6) and the outlet nozzle means (8,25), and
the device has control means (2, 12) for enabling determination of spraying parameters in accordance with the liquid to be sprayed from the replaceable cartridge received by the device.

2. A portable electrohydrodynamic spray device according to claim 1, wherein a body of said electrohydrodynamic spray device and said replaceable cartridge are each configured so that, when said replaceable cartridge is engaged with said body of said electrohydrodynamic spray device, at least a portion of said replaceable cartridge extends out from said body of said electrohydrodynamic spray device.

3. A portable electrohydrodynamic spray device according to claim 1 or 2, wherein said replaceable cartridge is configured to prevent any interaction between a user of said electrohydrodynamic spray device and said sprayable liquid contained within said replaceable cartridge.

4. A portable electrohydrodynamic spray device according to claim 1, 2 or 3, wherein said replaceable cartridge is configured to cause, when said replaceable cartridge is engaged with said electrohydrodynamic spray device, said control means (2, 12) of said electrohydrodynamic spray device to at least one of:
recognize said replaceable cartridge and automatically adjust certain pre-defined settings in accordance with the characteristics of said sprayable liquid; recognize said liquid replaceable cartridge and allow spraying; and recognize the amount and/or expiration date of said sprayable liquid contained within said replaceable cartridge and alert a user of said electrohydrodynamic spray device when a new replaceable cartridge is required.

5. A portable electrohydrodynamic spray device according to claim 1, 2 or 3, wherein said replaceable cartridge is configured to cause, when said replaceable cartridge is engaged with said electrohydrodynamic spray device, said control means (2, 12) of said electrohydrodynamic spray device to recognize said replaceable cartridge and automatically adjust certain pre-defined settings entered manually by a user using a control panel (2) of said electrohydrodynamic spray device in accordance with the characteristics of said sprayable liquid.

6. A portable electrohydrodynamic spray device according to any preceding claim, wherein the liquid reservoir means comprises two or more separate sprayable liquid reservoirs each coupled to the outlet nozzle means (8, 25) via a corresponding interface of the interface means (23) and a respective separate fluid path of the manifold (22).

7. A portable electrohydrodynamic spray device according to any preceding claim, wherein the liquid reservoir means (6) comprises two or more separate sprayable liquid reservoirs each coupled via a corresponding interface of the interface means (23) to the same fluid path of the manifold (22).

8. A portable electrohydrodynamic spray device according to claim 6 or 7, wherein the different reservoirs contain liquids comprising different ones or different combinations of a rinsing agent, a target preparation agent, a target sealing agent and an active ingredient.

9. A portable electrohydrodynamic spray device according to any of claims 1 to 5, wherein said the liquid reservoir means (6) contains at least an active ingredient sprayable liquid.

10. A portable electrohydrodynamic spray device according to any of claims 1 to 5, wherein said the liquid reservoir means (6) is configured to hold a first sprayable liquid comprising an active ingredient and a second sprayable liquid comprising one or more of a rinsing agent, a target preparation agent, a target sealing agent.

11. A portable electrohydrodynamic spray device according to any preceding claim, wherein the liquid reservoir means (6) contains sprayable liquid comprising: a water-based solution containing an active ingredient; an oil-based solution containing an active ingredient; or an oil-based non- aqueous, oil-continuous microemulsion.

12. A portable electrohydrodynamic spray device according to any of claims 1 to 10, wherein the liquid reservoir means (6) contains sprayable liquid comprising: a pesticidal formulation, for example a pesticidal formulation selected from: a herbicide, for example a polar-acidic agrochemical complex selected from glyphosate, 2,4-D, glufosinate, or combinations thereof; a fungicide; an insecticide; an acaricide; a miticide; a molluscicide; a nematicide; a rodenticide; a plant desiccant; a plant-growth regulator; or combinations thereof.

13. A portable electrohydrodynamic spray device according to any preceding claim, wherein the liquid reservoir means (6) contains sprayable liquid comprising a rinsing liquid comprising: a polar solvent; a non-polar solvent; or water.

14. A portable electrohydrodynamic spray device according to any preceding claim, wherein the liquid reservoir means (6) contains sprayable liquid comprising a target preparation liquid comprising an ingredient that opens pores in the cuticle of a target, for example an alkyl ester of a fatty acid, such as methyl oleate.

15. A portable electrohydrodynamic spray device according to any preceding claim, wherein the liquid reservoir means (6) contains sprayable liquid comprising a target sealing agent that seals pores in a cuticle of a target, for example a target sealing agent selected from bone glue, polyvinyl alcohol, polyvinyl acetate, drying oils, natural oils, and combinations thereof.

16. A portable electrohydrodynamic spray device according to any preceding claim, wherein the outlet nozzle means (8,25) has a plurality of outlet nozzles each coupled to a respective fluid path of the manifold (22).

17. A portable electrohydrodynamic spray device according to claim 16, wherein the manifold (22) has a passageway providing a succession of liquid flow path stages (24) which together define the liquid flow paths with the final liquid flow path stage providing a respective coupling to each of said outlet nozzles (25).

18. A spray head according to claim 17, wherein the passageway splits at each liquid flow path stage.

19. A fluid containment system comprising a portable electrohydrodynamic spray device in accordance with any of the preceding claims and one or more further such replaceable cartridges.

20. A method of spraying a target using a hand-held portable electrohydrodynamic spray device for receiving a replaceable fluid cartridge, a power source (3), comprising sprayable liquid reservoir means (6) and control means (2, 12) for enabling adjustment of spraying parameters, **characterized by**
attaching to the electrohydrodynamic spray device a replaceable cartridge having sprayable liquid reservoir means (6) in fluid communication with outlet nozzle means (8,25) via interface means (23) and a manifold (22) that provides a plurality of flow paths (24) between the liquid reservoir means (6) and the outlet nozzle means (8,25);
entering data using the control means (2,12) to determine spraying parameters in accordance with the liquid to be sprayed from the replaceable cartridge received by the electrohydrodynamic spray device;
positioning the outlet nozzle means (8,25) adjacent said target; and
activating said electrohydrodynamic spray device to provide a voltage to subject liquid issuing from the outlet nozzle means (8) to an electric field to cause electrohydrodynamic processing of the liquid in accordance with the determined spraying parameters so as to deliver said sprayable liquid to said target as a charged aerosol.

21. A method according to claim 20, wherein certain pre-defined spray parameters of the electrohydrodynamic spray device are adjusted in accordance with the characteristics of said sprayable liquid and said entered data.

22. A method according to claim 21, wherein said entering of data regarding said sprayable liquid and said adjusting of certain pre-defined spray parameters are automatically performed by the control means (2, 12) or manually entered by a user using a control panel (12) of the control means (2, 12)

23. A method according to claim 20 or 21, wherein said control means (2,12) comprises a microprocessor and said entering of data regarding said sprayable liquid into said electrohydrodynamic spray device is automatically performed upon attachment of said replaceable cartridge to said electrohydrodynamic device.

24. A method according to any of claims 20 to 23, further comprising rinsing said outlet nozzle means prior to and/or following said delivering said sprayable liquid.

25. A replaceable cartridge for attachment to an electrohydrodynamic spray device in accordance with claim 1, wherein said replaceable cartridge comprises:
a sprayable liquid reservoir means (6);
outlet nozzle means (8, 25)for providing a liquid spray; and
a manifold (22) in fluid communication with said liquid reservoir means (6) via interface means (23) and in fluid communication with the outlet nozzle means (8,25) to provide a plurality of flow paths (24) between the liquid reservoir means (6) and the outlet nozzle means (8,25).

26. A replaceable cartridge according to claim 25, wherein the outlet nozzle means (8,25) has a plurality of outlet nozzles each coupled to a respective fluid path of the manifold (22).

27. A replaceable cartridge according to claim 26, wherein the manifold (22) has a passageway providing a succession of liquid flow path stages (24) which together define the liquid flow paths with the final liquid flow path stage providing a respective coupling to each of said outlet nozzles (25).

28. A replaceable cartridge according to claim 27, wherein the passageway splits at each liquid flow path stage.

## Patentansprüche

1. Tragbare elektrohydrodynamische Sprühvorrichtung, die so konfiguriert ist, dass sie von einem Bediener gehalten werden kann, wobei die Vorrichtung aufweist:
einen Sprühkopf (10) mit einer auswechselbaren Patrone, die eine Behältereinrichtung (6) für sprühfähige Flüssigkeit und eine Düseneinrichtung (8, 25) aufweist; und
eine Energiequelle (3) zum Bereitstellen einer Spannung, um Flüssigkeit, die aus der Auslassdüseneinrichtung (8) austritt, einem elektrischen Feld zu unterwerfen, um die elektrohydrodynamische Verarbeitung der Flüssigkeit zur Erzeugung eines Sprays zu bewirken,
**dadurch gekennzeichnet, dass** die auswechselbare Patrone einen Verteiler (22) aufweist, der über eine Schnittstelleneinrichtung (23) mit der Flüssigkeitsbehältereinrichtung (6) in Flüssigkeitsverbindung steht und mit der Auslassdüseneinrichtung (8, 25) in Flüssigkeitsverbindung steht, um zwischen der Flüssigkeitsbehältereinrichtung (6) und der Auslassdüseneinrichtung (8, 25) eine Vielzahl von Fließpfaden (24) bereitzustellen, und
dass die Vorrichtung eine Steuereinrichtung (2, 12) aufweist zum Ermöglichen der Bestimmung von Sprühparametern gemäß der Flüssigkeit, die aus der in der Vorrichtung aufgenommenen auswechselbaren Patrone zu sprühen ist.

2. Tragbare elektrohydrodynamische Sprühvorrichtung nach Anspruch 1, wobei der Körper der elektrohydrodynamischen Sprühvorrichtung und die auswechselbare Patrone jeweils so konfiguriert sind, dass, wenn die auswechselbare Patrone mit dem Körper der elektrohydrodynamischen Sprühvorrichtung in Eingriff ist, wenigstens ein Teil der auswechselbaren Patrone sich aus dem Körper der elektrohydrodynamischen Sprühvorrichtung heraus erstreckt.

3. Tragbare elektrohydrodynamische Sprühvorrichtung nach Anspruch 1 oder 2, wobei die auswechselbare Patrone so konfiguriert ist, dass sie eine Interaktion zwischen dem Benutzer der elektrohydrodynamischen Sprühvorrichtung und der in der auswechselbaren Patrone enthaltenen sprühfähigen Flüssigkeit verhindert.

4. Tragbare elektrohydrodynamische Sprühvorrichtung nach Anspruch 1, 2 oder 3, wobei die auswechselbare Patrone so konfiguriert ist, dass sie, wenn die auswechselbare Patrone mit der elektrohydrodynamischen Sprühvorrichtung in Eingriff steht, die Steuereinrichtung (2, 12) der elektrohydrodynamischen Sprühvorrichtung zu wenigstens einem des Folgenden veranlasst:
Erkennen der auswechselbaren Patrone und automatisches Einstellen bestimmter vordefinierter Einstellungen gemäß den Eigenschaften der sprühfähigen Flüssigkeit;
Erkennen der Flüssigkeit in der auswechselbaren Patrone und Zulassen des Sprühens; und
Erkennen der Menge und/oder des Ablaufdatums der in der auswechselbaren Patrone enthaltenen Flüssigkeit und Alarmieren des Benutzers der tragbaren elektrohydrodynamischen Sprühvorrichtung, wenn eine neue auswechselbare Patrone erforderlich ist.

5. Tragbare elektrohydrodynamische Sprühvorrichtung nach Anspruch 1, 2 oder 3, wobei die auswechselbare Patrone so konfiguriert ist, dass sie, wenn die auswechselbare Patrone mit der elektrohydrodynamischen Sprühvorrichtung in Eingriff steht, veranlasst, dass die Steuereinrichtung (2, 12) der elektrohydrodynamischen Sprühvorrichtung die auswechselbare Patrone erkennt und automatisch bestimmte vordefinierte Einstellungen einstellt, die von einem Benutzer manuell unter Verwendung eines Bedienungsfelds (2) der elektrohydrodynamischen Sprühvorrichtung gemäß den Eigenschaften der sprühfähigen Flüssigkeit eingegeben wurden.

6. Tragbare elektrohydrodynamische Sprühvorrichtung nach einem der vorhergehenden Ansprüche, wobei die Flüssigkeitsbehältereinrichtung zwei oder mehr getrennte Behälter für sprühfähige Flüssigkeit aufweist, die jeweils über eine entsprechende Schnittstelle der Schnittstelleneinrichtung (23) und einen jeweiligen getrennten Flüssigkeitspfad des Verteilers (22) mit der Auslassdüseneinrichtung (8, 25) verbunden sind.

7. Tragbare elektrohydrodynamische Sprühvorrichtung nach einem der vorhergehenden Ansprüche, wobei die Flüssigkeitsbehältereinrichtung (6) zwei oder mehr separate Behälter für sprühfähige Flüssigkeit aufweist, die jeweils über eine entsprechende Schnittstelle der Schnittstelleneinrichtung (23) mit demselben Flüssigkeitspfad des Verteilers (22) verbunden sind.

8. Tragbare elektrohydrodynamische Sprühvorrichtung nach Anspruch 6 oder 7, wobei die verschiedenen Behälter Flüssigkeiten enthalten, die unterschiedliche von oder unterschiedliche Kombinationen von einem Spülmittel, einem Zielvorbereitungsmittel, einem Zielversiegelungsmittel und einem Wirkstoff aufweisen.

9. Tragbare elektrohydrodynamische Sprühvorrichtung gemäß einem der Ansprüche 1 bis 5, wobei die Flüssigkeitsbehältereinrichtung (6) wenigstens eine sprühfähige Wirkstoff-Flüssigkeit enthält.

10. Tragbare elektrohydrodynamische Sprühvorrichtung nach einem der Ansprüche 1 bis 5, wobei die Flüssigkeitsbehältereinrichtung (6) so konfiguriert ist, dass sie eine erste sprühfähige Flüssigkeit aufnimmt, die einen Wirkstoff enthält, und eine zweite sprühfähige Flüssigkeit, die eines oder mehrere eines Spülmittels, eines Zielvorbereitungsmittels und eines Zielversiegelungsmittels enthält.

11. Tragbare elektrohydrodynamische Sprühvorrichtung nach einem der vorhergehenden Ansprüche, wobei die Flüssigkeitsbehältereinrichtung (6) sprühfähige Flüssigkeit enthält, die umfasst: eine wasserbasierende Lösung mit einem Wirkstoff; eine ölbasierende Lösung mit einem Wirkstoff; oder eine ölbasierende nichtwässrige ölkontinuierliche Mikroemulsion.

12. Tragbare elektrohydrodynamische Sprühvorrichtung nach einem der Ansprüche 1 bis 10, wobei die Flüssigkeitsbehältereinrichtung (6) sprühfähige Flüssigkeit enthält, die umfasst: eine Pestizid-Rezeptur, beispielsweise eine Pestizid-Rezeptur ausgewählt aus: einem Herbizid, z.B. einem polar-säurehaltigen agrochemischen Komplex ausgewählt aus Glyphosat, 2,4-D, Glufosinat oder Kombinationen davon; einem Fungizid; einem Insektizid; einem Akarizid; einem milbentötenden Mittel; einem Molluscizid; einem Nematizid; einem Rodentizid; einem Pflanzen-Trockenmittel; einem Pflanzenwachstumsregulator; oder Kombinationen davon.

13. Tragbare elektrohydrodynamische Sprühvorrichtung nach einem der vorhergehenden Ansprüche, wobei die Flüssigkeitsbehältereinrichtung (6) sprühfähige Flüssigkeit enthält, die eine Spülflüssigkeit aufweist, die umfasst: ein polares Lösungsmittel; ein unpolares Lösungsmittel; oder Wasser.

14. Tragbare elektrohydrodynamische Sprühvorrichtung nach einem der vorhergehenden Ansprüche, wobei die Flüssigkeitsbehältereinrichtung (6) sprühfähige Flüssigkeit enthält, die eine Zielvorbereitungs-Flüssigkeit umfasst, die einen Bestandteil enthält, der Poren in der Oberhaut eines Zieles öffnet, beispielsweise ein Alkylester einer Fettsäure, z.B. Methyloleat.

15. Tragbare elektrohydrodynamische Sprühvorrichtung nach einem der vorhergehenden Ansprüche, wobei die Flüssigkeitsbehältereinrichtung (6) sprühfähige Flüssigkeit enthält, die ein Zielversiegelungsmittel umfasst, das Poren in der Oberhaut eines Zieles versiegelt, beispielsweise ein Zielversiegelungsmittel ausgewählt aus Knochenkleber, Polyvinylalkohol, Polyvinylacetat, Trocknungsölen, Naturölen, und Kombinationen davon.

16. Tragbare elektrohydrodynamische Sprühvorrichtung nach einem der vorhergehenden Ansprüche, wobei die Auslassdüseneinrichtung (8, 25) eine Vielzahl von Auslassdüsen aufweist, die jeweils mit einem entsprechenden Flüssigkeitspfad des Verteilers (22) verbunden sind.

17. Tragbare elektrohydrodynamische Sprühvorrichtung nach Anspruch 16, wobei der Verteiler (22) einen Durchgang aufweist, der eine Abfolge von Flüssigkeitsfließpfadstufen (24) bereitstellt, die zusammen die Flüssigkeitsfließpfade definieren, wobei die letzte Flüssigkeitsfließpfadstufe eine entsprechende Verbindung mit jeder der Auslassdüsen (25) bereitstellt.

18. Sprühkopf nach Anspruch 17, wobei sich der Durchgang an jeder Flüssigkeitsfließpfadstufe teilt.

19. Flüssigkeitsbehältersystem mit einer tragbaren elektrohydrodynamischen Sprühvorrichtung gemäß einem der vorhergehenden Ansprüche und einer oder mehreren derartigen auswechselbaren Patronen.

20. Verfahren zum Besprühen eines Zieles mittels einer in der Hand zu haltenden tragbaren elektrohydrodynamischen Sprühvorrichtung zur Aufnahme einer auswechselbaren Flüssigkeitspatrone, einer Energiequelle (3), mit einer Behältereinrichtung (6) für sprühfähige Flüssigkeit und eine Steuereinrichtung (2, 12) zum Ermöglichen der Einstellung von Sprühparametern, **gekennzeichnet durch**
Befestigen, an der elektrohydrodynamischen Sprühvorrichtung, einer auswechselbaren Patrone, die eine Behältereinrichtung (6) für sprühfähige Flüssigkeit aufweist, die über eine Schnittstelleneinrichtung (23) in Flüssigkeitskommunikation mit einer Auslassdüseneinrichtung (8, 25) steht, und einen Verteiler (22), der eine Vielzahl von Fließpfaden (24) zwischen der Flüssigkeitsbehältereinrichtung (6) und der Auslassdüseneinrichtung (8, 25) bereitstellt;
Eingeben von Daten unter Verwendung der Steuereinrichtung (2,12), um Sprühparameter gemäß der Flüssigkeit zu bestimmen, die aus der auswechselbaren Patrone zu versprühen ist, die von der elektrohydrodynamischen Sprühvorrichtung aufgenommen wird;
Positionieren der Auslassdüseneinrichtung (8, 25) nahe dem Ziel; und
Aktivieren der elektrohydrodynamischen Sprühvorrichtung, um eine Spannung bereitzustellen, um die aus der Auslassdüseneinrichtung (8) austretende Flüssigkeit einem elektrischen Feld auszusetzen, um die elektrohydrodynamische Verarbeitung der Flüssigkeit gemäß den bestimmten Sprühparametern zu bewirken, um die sprühfähige Flüssigkeit als geladenes Aerosol auf das Ziel aufzubringen.

21. Verfahren nach Anspruch 20, wobei bestimmte vordefinierte Sprühparameter der elektrohydrodynamischen Sprühvorrichtung gemäß den Eigenschaften der sprühfähigen Flüssigkeit und den eingegebenen Daten eingestellt werden.

22. Verfahren nach Anspruch 21, wobei das Eingeben von Daten hinsichtlich der sprühfähigen Flüssigkeit und das Einstellen bestimmter vordefinierter Sprühparameter automatisch durch die Steuereinrichtung (2, 12) durchgeführt wird, oder manuell durch einen Benutzer unter Verwendung eines Bedienungsfeldes (12) der Steuereinrichtung (2,12) eingegeben wird.

23. Verfahren nach Anspruch 20 oder 21, wobei die Steuereinrichtung (2,12) einen Mikroprozessor aufweist und das Eingeben von Daten hinsichtlich der sprühfähigen Flüssigkeit in die elektrohydrodynamische Sprühvorrichtung automatisch nach Befestigen der auswechselbaren Patrone an der elektrohydrodynamischen Sprühvorrichtung erfolgt.

24. Verfahren nach einem der Ansprüche 20 bis 23, das des Weiteren das Spülen der Auslassdüseneinrichtung vor und/oder nach dem Ausbringen der sprühfähigen Flüssigkeit umfasst.

25. Auswechselbare Patrone zum Befestigen an einer elektrohydrodynamischen Sprühvorrichtung gemäß Anspruch 1, wobei die auswechselbare Patrone aufweist:
eine Behältereinrichtung (6) für sprühfähige Flüssigkeit;
eine Auslassdüseneinrichtung (8, 25) zum Bereitstellen eines. Flüssigkeitssprays; und
einen Verteiler (22), der über eine Schnittstelleneinrichtung (23) mit der Flüssigkeitsbehältereinrichtung (6) in Flüssigkeitskommunikation steht und mit der Auslassdüseneinrichtung (8, 25) in Flüssigkeitskommunikation steht, um eine Vielzahl von Fließpfaden (24) zwischen der Flüssigkeitsbehältereinrichtung (6) und der Auslassdüseneinrichtung (8, 25) bereitzustellen.

26. Auswechselbare Patrone nach Anspruch 25, wobei die Auslassdüseneinrichtung (8, 25) eine Vielzahl von Auslassdüsen aufweist, die jeweils mit einem entsprechenden Flüssigkeitspfad des Verteilers (22) verbunden sind.

27. Auswechselbare Patrone nach Anspruch 26, wobei der Verteiler (22) einen Durchgang aufweist, der eine Abfolge von Flüssigkeitsfließpfadstufen (24) bereitstellt, die zusammen die Flüssigkeitsfließpfade definieren, wobei die letzte Flüssigkeitsfließpfadstufe eine entsprechende Verbindung mit jeder der Auslassdüsen (25) bereitstellt.

28. Auswechselbare Patrone nach Anspruch 27, wobei der Durchgang sich bei jeder Flüssigkeitsfließpfadstufe teilt.

## Revendications

1. Dispositif de pulvérisation électrohydrodynamique portable configuré pour être tenu par un opérateur, le dispositif comportant:
une tête de pulvérisation (10) comprenant une cartouche remplaçable comprenant un
moyen de réservoir de liquide pulvérisable (6) et un moyen de buse de sortie (8, 25) ; et
une source d'énergie (3) destinée à fournir une tension pour soumettre un liquide sortant du moyen de buse de sortie (8) à un champ électrique pour entraîner un traitement électrohydrodynamique du liquide pour produire une pulvérisation,
**caractérisé en ce que** la cartouche remplaçable comporte un collecteur (22)' en communication fluide avec ledit moyen de réservoir de liquide (6) par t'intermédiaire d'un moyen d'interface (23) et en communication fluide avec le moyen de buse de sortie (8, 25) pour fournir une pluralité de passages d'écoulement (24) entre le moyen de réservoir de liquide (6) et le moyen de buse de sortie (8, 25), et
le dispositif comporte un moyen de commande (2, 12) pour permettre la détermination de paramètres de pulvérisation selon le liquide à pulvériser à partir de la cartouche remplaçable reçue par le dispositif.

2. Dispositif de pulvérisation électrohydrodynamique portable selon la revendication 1, dans lequel un corps dudit dispositif de pulvérisation électrohydrodynamique et ladite cartouche remplaçable sont chacun configurés de sorte que, lorsque ladite cartouche remplaçable est en prise avec ledit corps dudit dispositif de pulvérisation élcctrohydrodynamique, au moins une partie de ladite cartouche remplaçable s'étend hors dudit corps dudit dispositif de pulvérisation électrohydrodynamique.

3. Dispositif de pulvérisation électrohydrodynamique portable selon la revendication 1 ou 2, dans lequel ladite cartouche remplaçable est configurée pour empêcher une quelconque interaction entre un utilisateur dudit dispositif de pulvérisation électrohydrodynamique et ledit liquide pulvérisable contenu à l'intérieur de ladite cartouche remplaçable.

4. Dispositif de pulvérisation électrohydrodynamique portable selon la revendication 1, 2 ou 3, dans lequel ladite cartouche remplaçable est configurée pour forcer, lorsque ladite cartouche remplaçable est en prise avec ledit dispositif de pulvérisation électrohydrodynamique, ledit moyen de commande (2, 12) dudit dispositif de pulvérisation électrohydrodynamique à au moins réaliser une action parmi :
reconnaître ladite cartouche remplaçable et automatiquement ajuster certains réglages prédéfinis selon les caractéristiques dudit liquide pulvérisable ; reconnaître ladite cartouche remplaçable de liquide et permettre la pulvérisation ; et reconnaître la quantité et/ou date d'expiration dudit liquide pulvérisable contenu à l'intérieur de ladite cartouche remplaçable et alerter un utilisateur dudit dispositif de pulvérisation électrohydrodynamique lorsqu'une nouvelle cartouche remplaçable est requise.

5. Dispositif de pulvérisation électrohydrodynamique portable selon la revendication 1, 2 ou 3, dans lequel ladite cartouche remplaçable est configurée pour forcer, lorsque ladite cartouche remplaçable est en prise avec ledit dispositif de pulvérisation électrohydrodynamique, ledit moyen de commande (2,12) dudit dispositif de pulvérisation électrohydrodynamique à reconnaître ladite cartouche remplaçable et ajuster automatiquement certains réglages prédéfinis entrés manuellement par un utilisateur à l'aide d'un tableau de commande (2) dudit dispositif de pulvérisation électrohydrodynamique selon les caractéristiques dudit liquide pulvérisable.

6. Dispositif de pulvérisation électrohydrodynamique portable selon l'une quelconque des revendications précédentes, dans lequel le moyen de réservoir de liquide comprend deux réservoirs de liquide pulvérisable séparés, ou plus, chacun couplé au moyen de buse de sortie (8,25) par l'intermédiaire d'une interface correspondante du moyen d'interface (23) et un passage de fluide séparé respectif du collecteur (22).

7. Dispositif de pulvérisation électrohydrodynamique portable selon l'une quelconque des revendications précédentes, dans lequel le moyen de réservoir de liquide (6) comprend deux réservoirs de liquide pulvérisable séparés, ou plus, chacun couplé par l'intermédiaire d'une interface correspondante du moyen d'interface (23) au même passage de fluide du collecteur (22).

8. Dispositif de pulvérisation électrohydrodynamique portable selon la revendication 6 ou 7, dans lequel les différents réservoirs contiennent des liquides comprenant différents produits ou différentes combinaisons parmi un agent de rinçage, un agent de préparation cible, un agent d'étanchéité cible et un ingrédient actif.

9. Dispositif de pulvérisation électrohydrodynamique portable selon l'une quelconque des revendications 1 à 5, dans lequel ledit moyen de réservoir de liquide (6) contient au moins un liquide pulvérisable d'ingrédient actif.

10. Dispositif de pulvérisation électrohydrodynamique portable selon l'une quelconque des revendications 1 à 5, dans lequel ledit moyen de réservoir de liquide (6) est configuré pour contenir un premier liquide pulvérisable comprenant un ingrédient actif et un second liquide pulvérisable comprenant un ou plusieurs parmi un agent de rinçage, un agent de préparation cible, un agent d'étanchéité cible.

11. Dispositif de pulvérisation électrohydrodynamique portable selon l'une quelconque des revendications précédentes, dans lequel le moyen de réservoir de liquide (6) contient un liquide pulvérisable comprenant : une solution à base d'eau contenant un ingrédient actif; une solution à base d'huile contenant un ingrédient actif; ou une micro-émulsion à phase continue huileuse non aqueuse à base d'huile.

12. Dispositif de pulvérisation électrohydrodynamique portable selon l'une quelconque des revendications 1 à 10, dans lequel le moyen de réservoir de liquide (6) contient un liquide pulvérisable comprenant : une formulation pesticide, par exemple une formulation pesticide sélectionnée parmi : un herbicide, par exemple un complexe agrochimique polaire-acide sélectionné parmi le glyphosate, 2,4-D, glufosinate, ou des combinaisons de ceux-ci ; un fongicide ; un insecticide ; un acaricide ; un miticide ; un molluscicide ; un nématicide ; un rodenticide ; un déshydratant pour végétaux ; un régulateur de croissance pour végétaux ; ou des combinaisons de ceux-ci.

13. Dispositif de pulvérisation électrohydrodynamique portable selon l'une quelconque des revendications précédentes, dans lequel le moyen de réservoir de liquide (6) contient un liquide pulvérisable comprenant un liquide de rinçage comprenant : un solvant polaire ; un solvant non polaire ; ou de l'eau.

14. Dispositif de pulvérisation électrohydrodynamique portable selon l'une quelconque des revendications précédentes, dans lequel le moyen de réservoir de liquide (6) contient un liquide pulvérisable comprenant un liquide de préparation cible comprenant un ingrédient qui ouvre les pores dans la cuticule d'une cible, par exemple un ester alkylé d'un acide gras, tel que l'oléate de méthyle.

15. Dispositif de pulvérisation électrohydrodynamique portable selon l'une quelconque des revendications précédentes, dans lequel le moyen de réservoir de liquide (6) contient un liquide pulvérisable comprenant un agent d'étanchéité cible qui ferme les pores dans une cuticule d'une cible, par exemple un agent d'étanchéité cible sélectionné parmi une colle d'os, un alcool polyvinylique, un acétate de polyvinyle, des huiles siccatives, des huiles naturelles, et des combinaisons de ceux-ci.

16. Dispositif de pulvérisation électrohydrodynamique portable selon l'une quelconque des revendications précédentes, dans lequel le moyen de buse de sortie (8, 25) comporte une pluralité de buses de sortie chacune couplée à un passage respectif de fluide du collecteur (22).

17. Dispositif de pulvérisation électrohydrodynamique portable selon la revendication 16, dans lequel le collecteur (22) comporte une voie de passage fournissant une succession d'étages de passage d'écoulement de liquide (24) qui conjointement définissent les passages d'écoulement de liquide avec l'étage final de passage d'écoulement de liquide fournissant un couplage respectif à chacune desdites buses de sortie (25).

18. Tête de pulvérisation selon la revendication 17, dans laquelle la voie de passage se divise au niveau de chaque étage de passage d'écoulement de liquide.

19. Système de retenue de fluide comprenant un dispositif de pulvérisation électrohydrodynamique portable selon l'une quelconque des revendications précédentes et une ou plusieurs telles cartouches remplaçables supplémentaires.

20. Procédé de pulvérisation d'une cible l'aide d'un dispositif de pulvérisation électrohydradynamique portable destiné à recevoir une cartouche de fluide remplaçable, une source d'énergie (3), comprenant un moyen de réservoir de liquide pulvérisable (6) et un moyen de commande (2, 12) pour permettre l'ajustement de paramètres de pulvérisation, **caractérisé par** les étapes consistant à :
fixer au dispositif de pulvérisation électrohydrodynamique une cartouche remplaçable, comportant un moyen de réservoir de liquide pulvérisable (6) en communication fluide avec un moyen de buse de sortie (8,25) par l'intermédiaire d'un moyen d'interface (23) et un collecteur (22) qui fournit une pluralité de passages d'écoulement (24) entre le moyen de réservoir de liquide (6) et le moyen de buse de sortie (8,25) ;
entrer des données à l'aide du moyen de commande (2, 12) pour déterminer des paramètres de pulvérisation selon le liquide destiné à être pulvérisé à partir de la cartouche remplaçable reçue par le dispositif de pulvérisation électrohydrodynamique ;
positionner le moyen de buse de sortie (8, 25) à côté de ladite cible ; et
activer ledit dispositif de pulvérisation électrohydrodynamique pour fournir une tension pour soumettre un liquide s'écoulant du moyen de buse de sortie (8) à un champ électrique pour forcer le traitement électrohydrodynamique du liquide selon les paramètres de pulvérisation déterminés afin de distribuer ledit liquide pulvérisable à ladite cible en tant qu'aérosol chargé.

21. Procédé selon la revendication 20, dans lequel certains paramètres de pulvérisation prédéfinis du dispositif de pulvérisation électrohydrodynamique sont ajustés selon les caractéristiques dudit liquide pulvérisable et lesdites données entrées.

22. Procédé selon la revendication 21, dans lequel ladite étape consistant à entrer des données concernant ledit liquide pulvérisable et ladite étape consistant à ajuster certains paramètres de pulvérisation prédéfinis sont automatiquement réalisées par le moyen de commande (2, 12) ou entrées manuellement par un utilisateur à l'aide d'un tableau de commande (12) du moyen de commande (2, 12)

23. Procédé selon la revendication 20 ou 21, dans lequel ledit moyen de commande (2, 12) comprend un microprocesseur et ladite étape consistant à entrer des données concernant ledit liquide pulvérisable dans ledit dispositif de pulvérisation électrohydrodynamique est réalisée automatiquement lors de la fixation de ladite cartouche remplaçable audit dispositif électrohydrodynamique.

24. Procédé selon l'une quelconque des revendications 20 à 23, comprenant en outre l'étape consistant à rincer ledit moyen de buse de sortie avant et/ou après l'étape consistant à distribuer ledit liquide pulvérisable.

25. Cartouche remplaçable destinée à être fixée à un dispositif de pulvérisation électrohydrodynamique selon la revendication 1, dans lequel ladite cartouche remplaçable comprend :
un moyen de réservoir de liquide pulvérisable (6) ;
un moyen de buse de sortie (8, 25) destiné à fournir une pulvérisation liquide ; et
un collecteur (22) en communication fluide avec ledit moyen de réservoir de liquide (6) par i'intermédiaire d'un moyen d'interface (23) et en communication fluide avec le moyen de buse de sortie (8, 25) pour fournir une pluralité de passages d'écoulement (24) entre le moyen de réservoir de liquide (6) et le moyen de buse de sortie (8, 25).

26. Cartouche remplaçable selon la revendication 25, dans lequel le moyen de buse de sortie (8, 25) comporte une pluralité de buses de sortie chacune couplées à un passage de fluide respectif du collecteur (22).

27. Cartouche remplaçable selon la revendication 26, dans lequel le collecteur (22) comporte une voie de passage fournissant une succession d'étages dé passage d'écoulement de liquide (24) qui conjointement définissent les passages d'écoulement de liquide, l'étage final de passage d'écoulement de liquide fournissant un couplage respectif à chacune desdites buses de sortie (25).

28. Cartouche remplaçable selon la revendication 27, dans lequel la voie de passage se divise au niveau de chaque étage de passage d'écoulement de liquide.
